# EUROPEAN PATENT SPECIFICATION

(11) **EP 3 285 585 B1**
(45) Date of publication and mention of the grant of the patent: **19.08.2020**
(21) Application number: 16769367.0
(22) Date of filing: 17.03.2016
(51) Int. Cl.: A01N 25/30, A01N 57/20, A01N 37/40, A01N 43/54, A01N 37/12, A01N 37/32, A01N 61/00, A01P 13/00

(54) **MALEATED NATURAL OIL DERIVATIVES AS AGROCHEMICAL ADJUVANTS**
MALEIERTE DERIVATE NATÜRLICHER ÖLE ALS AGROCHEMISCHE ADJUVANTIEN
UTILISATION DE DÉRIVÉS D'HUILE NATURELLE MALÉATÉS COMME INGRÉDIENTS AGROCHIMIQUES ADJUVANTES

(30) Priority: 25.03.2015 US 201562137886 P
(43) Date of publication of application: 28.02.2018
(73) Proprietor: Indorama Ventures Oxides LLC, The Woodlands, TX 77380 (US)
(72) Inventor: MEREDITH, Matthew, T., Spring, TX 77381 (US)
(74) Representative: Weidner Stern Jeschke
(86) International application number: PCT/US2016/022840
(87) International publication number: WO 2016/153913

(56) References cited:
- WO-A1-99/61563
- WO-A1-2005/071050
- WO-A1-2009/006527
- WO-A1-2012/003441
- WO-A1-2014/044732
- WO-A2-2013/126916
- WO-A2-2014/200671
- US-A- 2 033 131
- US-A- 2 033 132
- US-A- 3 412 053
- US-A1- 2010 113 275
- US-A1- 2010 113 275
- US-A1- 2013 289 284
- US-A1- 2014 275 370
- US-A1- 2014 275 370
- SUBHANKAR GHORUI ET AL: "Use of maleated castor oil as biomodifier in unsaturated polyester resin/fly ash composites", INDUSTRIAL CROPS AND PRODUCTS., vol. 34, no. 1, 1 July 2011 (2011-07-01), pages 893-899, XP055498684, NL ISSN: 0926-6690, DOI: 10.1016/j.indcrop.2011.02.007
- R G ROBINSON ET AL: "Vegetable Oil Replacements for Petroleum Oil Adjuvants in Herbicide Sprays", ECONOMIC BOTANY., vol. 29, no. 2, 1 April 1975 (1975-04-01), pages 146-151, XP055498719, US ISSN: 0013-0001

## Description

### FIELD OF THE INVENTION

The present disclosure is directed to adjuvant compositions containing a product obtained from the reaction of a maleated natural oil and a compound comprising at least one polyetheramine and its use in agrochemical formulations.

### BACKGROUND OF THE INVENTION

In addition to active ingredients, agrochemical formulations also contain inert ingredients which make the agrochemical formulations easier to handle, more convenient to apply and/or more efficacious. Many different classes of inert ingredients are available for use including emulsifiers, dispersants and adjuvants, and can, depending on their type, enhance wetting, spreading, sticking, emulsifying, dispersing and/or the biological activity of the agrochemical formulation.

There is no universal inert ingredient that can improve the performance of all active ingredients. Thus, the inert ingredient(s) selected and the relative amounts used must be tailored to the specific conditions of each application. Examples include:
U.S. Pat. No. 5,495,033, which discloses a methylated acidulated soybean soap stock which can be used with various herbicides;
U.S. Pat. No. 5,521,144, which teaches an adjuvant for post-emergent herbicides that includes acidulated soap stock combined with an alkylphenol ethoxylate or a blend of an alcohol ethoxylate and glycol ether or an anionic surfactant;
U.S. Pat. No. 5,658,855, which describes combining an amine or ammonia compound, an ammonium salt, a nonionic surfactant having a high HLB, and water and its use with pesticides;
U.S. Pat. No. 5,888,934, which discloses an inert ingredient for improving rainfastness including an alkyl polyglucoside and an ethoxylated alcohol obtained from the ethoxylation of an aliphatic mono alcohol;
U.S. Pat. No. 5,928,563, which teaches an adjuvant containing a sulfated alkyl oleate, an alkyl polyglucoside and a C₆ - C₁₈ alkyl ester;
U.S. Pat. No. 5,942,542, which describes inert ingredients for use with a pyrethroid insecticide comprising an alkyl ester of a fatty acid having a level of unsaturation of at least 40% or an alkyl ester of a dibasic acid and a nonionic emulsifier;
US 2003/0104947, which discloses combining a petroleum oil with a pH adjuster, and a nonionic surfactant and its use in agrochemical formulations;
U.S. Pat. No. 6,642,178, which teaches an adjuvant for use in spray carriers comprising a nitrogen fertilizer, a modified vegetable oil, a pH adjuster and a blend of high, intermediate and low HLB nonionic surfactants;
WO 2004/080177, which describes an adjuvant in the form of a microemulsion containing a hydrocarbon or fatty acid ester, an alkyl polyglucoside, a glycerol or sorbitan ester, and water;
US 2005/0129662 which discloses the use of vegetable oil as an adjuvant;
US 2010/0113275 discloses a method of reducing spray drift of a pesticide which includes the use of a succinate triglyceride compound;
US 2011/0201504, which discloses an adjuvant mixture containing a fatty acid alkyl ester, at least two non-ionic surfactants selected from alkyl polyglucosides, sorbitol esters, and polyglyercol esters and optionally a polyol; and
US 2013/0210630, which exemplifies ethyl maleated soybean and linseed oil as an emulsifier for an active ingredient.

Most agrochemical formulations contain more than one inert ingredient to help deliver the active ingredient to the desired target weed, insect, fungus, etc. Some of these inert ingredients are sourced from resources which are not renewable or have inconsistent/seasonal availability. Others are persistent in the environment having toxic biodegradation products or other undesired side-effects. Also, every time a new active ingredient is introduced into the market, unique formulation development is required to deliver the active ingredient into the field. Therefore, there is a need to develop new, versatile agrochemical inert ingredients that are non-toxic and inspired by or created from renewable resources.

### SUMMARY OF THE INVENTION

The present disclosure provides an adjuvant composition according to claim 1.

In another aspect, the present disclosure provides an agrochemical formulation for application onto a target substrate to elicit a chemical or biological effect. The agrochemical formulation comprises (i) a pesticidally effective amount of a pesticide or a mixture of pesticides and (ii) the adjuvant composition of claim 1. The adjuvant composition is present in the agrochemical formulation at a concentration such that the pesticidal efficacy of the agrochemical formulation is enhanced as compared to a reference agrochemical formulation devoid of the adjuvant composition of the present disclosure but otherwise having the same ingredients as the agrochemical formulation. Thus, the addition of such an adjuvant composition to the agrochemical formulation makes possible a faster uptake of active ingredients by a target substrate treated with the agrochemical formulation. This enhanced activity may give rise to the following aspects in the treatment of a target substrate with the agrochemical formulation: a comparatively greater activity of the active ingredient at a given application rate; a comparatively lower application rate at a given activity; and, a comparatively greater uptake of the active ingredient by the target substrate.

In another aspect, the present disclosure provides a concentrate composition according to claim 9 and a spray formulation according to claim 10.

In still another aspect, the present disclosure provides a method for killing, inhibiting or repelling a pest which includes: providing the pesticide or a mixture of pesticides in a pesticidally effective amount; providing an effective amount of the adjuvant composition of claim 1; combining the pesticide or mixture of pesticides with the adjuvant composition to form an agrochemical formulation; and, contacting the agrochemical formulation and the pest.

### DETAILED DESCRIPTION OF THE INVENTION

The present disclosure provides an adjuvant composition according to claim 1 comprising a maleated natural oil derivative. The adjuvant composition can be provided to a user after having been premixed with a pesticide or a mixture of pesticides. Alternatively, the adjuvant composition can be provided to a user either by itself or in a concentrated composition or spray formulation, for example.

It has been surprisingly found that the adjuvant composition of the present disclosure is useful in agrochemical formulations for enhancing efficacy of the active ingredients in the agrochemical formulations. By "enhanced" it is to be understood that the adjuvant composition comprising the maleated natural oil derivative of the present disclosure increases the performance of the active ingredients in agrochemical formulations (for example, a higher activity of the active ingredients for a given application rate, a lower application rate with a given effect, better uptake of the active ingredient by the target substrate, and thus advantages for a pre-emergence or post-emergence treatment, in particular the spray treatment of target substrates) as compared to agrochemical formulations that do not contain the maleated natural oil derivatives of the present disclosure. Moreover, the maleated natural oil derivatives of the present disclosure have a surfactant-like structure with the oil-part of the molecule acting as a hydrophobe and the attached derivative group acting as a hydrophile. Thus, the maleated natural oil derivative is di-functional, and in some embodiments, may be used in an adjuvant composition or agrochemical formulation that is substantially free of surfactants which is surprising and advantageous since the number of components generally added is greatly reduced.

As used herein, the term "adjuvant composition" is a composition which enhances the bioactivity of a pesticide and which has no bioactivity in its own right.

The term "substantially free" means, when used with reference to the substantial absence of a material in a formulation, that such a material is present, if at all, as an incidental impurity or by-product. In other words, the material does not affect the properties of the formulation.

Additionally, a "pesticidally effective amount" refers to that amount of a pesticide which, upon application, either reduces the presence of pests, or enhances a plant's resistance to a pest.

Also, the term "target substrate" refers to sites underlying plant foliage which are the intended destination for the pesticide including, but not limited to, natural ground surfaces such as soil, water (lakes, ponds, marshes, swamps, streams, puddles, etc.) and artificial surfaces such as pavement; a pest; or a combination thereof.

A "pest" generally includes insects, mites, ticks and other arthropods; disease agents such as fungi, protozoa, bacteria and viruses; helminths, nematodes (roundworms), cestodes (tapeworms), platyhelminths (flatworms), trematodes (flukes) and other worms; sporozoan parasites; slugs and snails; and vertebrates such as birds, rodents or other vertebrates which can directly or indirectly injure or cause disease or damage in any plant or part thereof or any processed, manufactured or other product of the plant.

The term "comprising" and derivatives thereof are not intended to exclude the presence of any additional component, step or procedure, whether or not the same is disclosed herein. In order to avoid any doubt, all compositions claimed herein through use of the term "comprising" may include any additional additive or compound, unless stated to the contrary. In contrast, the term, "consisting essentially of" if appearing herein, excludes from the scope of any succeeding recitation any other component, step or procedure, excepting those that are not essential to operability and the term "consisting of", if used, excludes any component, step or procedure not specifically delineated or listed. The term "or", unless stated otherwise, refers to the listed members individually as well as in any combination.

The articles "a" and "an" are used herein to refer to one or more than one (i.e. to at least one) of the grammatical object of the article. By way of example, "a maleated natural oil derivative" means one maleated natural oil derivative or more than one maleated natural oil derivative.

The phrases "in one embodiment", "according to one embodiment" and the like generally mean the particular feature, structure, or characteristic following the phrase is included in at least one embodiment of the present invention, and may be included in more than one embodiment of the present invention. Importantly, such phases do not necessarily refer to the same embodiment.

If the specification states a component or feature "may", "can", "could", or "might" be included or have a characteristic, that particular component or feature is not required to be included or have the characteristic.

### Adjuvant Composition

The adjuvant composition of the present disclosure includes a maleated natural oil derivative. The maleated natural oil derivative is obtained from the reaction of a maleated natural oil and a compound comprising at least one polyetheramine.

The natural oil used in preparing the maleated natural oil derivative of the present disclosure is derived from renewable feedstock resources, such as natural and/or genetically modified (GMO) plant vegetable seeds and/or animal source fats. Such plant vegetable seeds or animal source fats include oils and/or fats that are generally comprised of triglycerides, that is, fatty acids linked together with glycerol. For example, the natural oil may have at least about 70 percent unsaturated fatty acids in the triglyceride, while in another embodiment, the natural oil may have at least 85 percent by weight unsaturated fatty acids. Such unsaturated fatty acids have at least one allylic hydrogen or "ene moiety" present in the fatty portion of the fatty acid.

In one embodiment, the natural oil is a vegetable oil such as, but not limited to, castor oil, soybean oil, olive oil, peanut oil, rapeseed oil, corn oil, sesame oil, cotton oil, canola oil, safflower oil, linseed oil, palm oil, grapeseed oil, black caraway oil, pumpkin oil, kernel oil, borage seed oil, wood germ oil, apricot kernel oil, pistachio oil, almond oil, macadamia nut oil, avocado oil, sea buckthorn oil, hemp oil, hazelnut oil, evening primrose oil, wild rose oil, thistle oil, walnut oil, sunflower oil, jatropha seed oil, or a combination thereof. Additionally, natural oils obtained from organisms such as algae may also be used. Examples of natural oils from animal sources include lard, beef tallow, fish oils and mixtures thereof. A combination of vegetable oil, algae obtained oil, and/or animal based oils may also be used. In one embodiment, the natural oil is not corn oil.

The natural oils, as described herein, also include the fatty acids or fatty acid esters derived from the natural oils or fats. That is, the term 'natural oil" also includes unsaturated fatty acids and the corresponding esters thereof. Examples of such unsaturated fatty acids include oleic acid, myristoleic acid, palmitoleic acid, linoleic acid, α-linolenic acid, arachidonic acid, icosapentaenoic acid, erucic acid, and docosahexaenoic acid. Examples of fatty acid esters include alkyl esters of vegetable oils, obtained by traditional transesterification techniques to produce products such as methyl soyate (methyl ester of soybean oil), methyl oleate (methyl ester of oleic acid), and methyl cannolate (methyl ester of canola oil).

Natural oils also include glyceryl esters of fatty acids, which are synthesized by reaction of glycerol with 1, 2, or 3 molar equivalents of a fatty acid or mixture of fatty acids. These compounds can be mono, di, or triglycerides of a single fatty acid or mixture of fatty acids. Some examples are glyceryl dioleate, glyceryl triolate, glyceryl distearate, and glyceryl trilinoleate.

In yet another embodiment, the natural oils also include the fatty acids of a sugar or sugar alcohol. Such fatty acids are described in U.S. Pat. No. 3,600,186. The term sugar is used herein in its conventional sense as generic to mono and disaccharides. The term sugar alcohol is also used in its conventional sense as generic to the reduction product of sugars wherein the aldehyde or ketone group has been reduced to an alcohol. These fatty acid ester compounds may be prepared by reacting a mono saccharide, disaccharide or sugar alcohol with fatty acid.

Examples of suitable monosaccharides are those containing 4 hydroxyl groups such as xylose, arabinose, and ribose; the sugar alcohol derived from xylose, i.e., xylitol, is also suitable. The monosaccharide erythrose is not suitable since it only contains 3 hydroxyl groups; however, the sugar alcohol derived from erythrose, i.e., erythritol, contains 4 hydroxyl groups and is thus suitable. Among 5 hydroxyl-containing monosaccharides that are suitable for use herein are glucose, mannose, gelactose, fructose, and sorbose. A sugar alcohol derived from sucrose, glucose, or sorbose, e.g., sorbitol, contains 6 hydroxyl groups and is also suitable as the alcohol moiety of the fatty acid ester compound. Examples of suitable disaccharides are maltose, lactose, and sucrose, all of which contain 8 hydroxyl groups.

In preparing the sugar or sugar alcohol fatty acid, at least 4 hydroxyl groups of a sugar or sugar alcohol compound such as those identified above must be esterified with a fatty acid having from about 8 to about 22 carbon atoms. Examples of such fatty acids are caprylic, capric, lauric, myristic, myristoleic, palmitic, palmitoleic, stearic, oleic, ricinoleic, linoleic, linolenic, eleostearic, arachidic, behenic, and erucic. Fatty acids per se or naturally occurring fats and oils can serve as the source for the fatty acid component in the sugar or sugar alcohol fatty acid ester. For example, rapeseed oil provides a good source for C₂₂ fatty acid. C₁₆-C₁₈ fatty acid can be provided by tallow, soybean oil, or cottonseed oil. Shorter chain fatty acids can be provided by coconut, palm kernel, or babassu oils. Corn oil, lard, olive oil, palm oil, peanut oil, safflower seed oil, sesame seed oil, and sunflower seed oil, are examples of other natural oils which can serve as the source of the fatty acid component. Among the fatty acids, those that are preferred have from about 14 to about 18 carbon atoms, and are most preferably selected from the group consisting of myristic, palmitic, stearic, oleic, and linoleic. Thus, natural fats and oils which have a high content of these fatty acids represent preferred sources for the fatty acid components, e.g., soybean oil, olive oil, cottonseed oil, corn oil, tallow and lard.

The sugar or sugar alcohol fatty acid esters suitable for use in this invention can be prepared by a variety of methods well known to those skilled in the art. These methods include: transesterification with another ester such as methyl, ethyl or glycerol, acylation with a fatty acid chloride; acylation with a fatty acid anhydride, and acylation with a fatty acid per se.

The following are examples of suitable sugar or sugar alcohol fatty acid esters containing at least 4 fatty acid ester groups suitable for use in the present disclosure: glucose tetraoleate, glucose tetrastearate, glucose tetraester of soybean oil fatty acid, mannose tetraester of tallow fatty acid, galactose tetraester of olive oil fatty acid, aribinose tetraester of cottonseed oil fatty acid, xylose tetralinoleate, galactose pentastearate, sorbitol tetraoleate, sorbitol hexaester of olive oil fatty acid, xylitol pentapalrnitate, xylitol tetraester of substantially completely hydrogenated cottonseed oil fatty acid, sucrose tetrastearate, sucrose pentastearate, sucrose hexaoleate, sucrose octaoleate, sucrose octaester of substantially completely hydrogenated soybean oil fatty acid, sucrose octaester of peanut oil fatty acid, erythritol tetraester of olive oil fatty acid, erythritol tetraoleate, xylitol pentaoleate, sorbitol hexaoleate, sucrose octaoleate, sucrose octaester of soybean oil fatty acid and mixtures thereof.

The natural oil (or combination of natural oils) is reacted in an ene reaction with an enophile or enophile/dienophile mixture that contains acid, half ester or anhydride functionality to form a maleated natural oil. As used throughout the specification and in the claims the terms "maleated", "maleation" and the like refer to the modifications of natural oil molecules which introduce additional carboxylic moieties (or the related anhydride structure) onto the natural oil molecules by reaction of the natural oil with one or more of an α,β-unsaturated carboxylic acid or anhydride, for e.g., maleic anhydride. The α,β-unsaturated carboxylic acid or anhydride can be a biogenically derived α,β-unsaturated carboxylic acid or anhydride. Non-limiting examples of biogenically derived α,β-unsaturated carboxylic acids or anhydrides include itaconic acid, itaconic anhydride, aconitic acid, aconitic anhydride, acrylic acid, methacrylic acid, citraconic acid, citraconic anhydride, mesaconic acid, muconic acid, glutaconic acid, methylglutaconic acid, traumatic acid, and fumaric acid. The acids and anhydrides include any isomers (e.g. enantiomers, diastereomers, and cis-/trans-isomers), and salts. In some embodiments, the α,β-unsaturated carboxylic acid and anhydride can be one the following unsaturated acids: maleic anhydride, maleic acid, fumaric acid, acrylic acid, methacrylic acid and their mixtures.

In one non-limiting example, maleic anhydride is reacted with a vegetable oil as shown below: 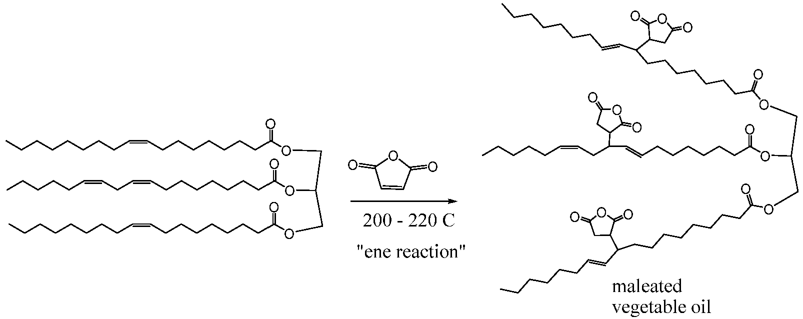 Reaction conditions are well known to those skilled in the art and can be found at, for example, U.S. Pat. No. 2,188,882 and 2,188,887. Thus, the reaction of the non-limiting example above, for illustration purposes only, may be performed at elevated temperatures, such as a temperature between about 150°C and about 300°C, alternatively between about 170°C and about 230°C, or alternatively between about 200°C and about 220°C. The reaction time may be between about 0.5 hours and about 10 hours. In one embodiment the reaction time is between about 1 hour and about 5 hours, and in another embodiment, between about 2 hours and 4 hours.

During maleation, the mole ratio of natural oil:enophile or enophile/dienophile mixture in some embodiments is less than or equal to 1, in other embodiments from 0.3 to 1.0, in even other embodiments from 0.50 to 1.00, and in still other embodiments from 0.55 to 0.75 and in even further embodiments from 0.60 to 0.70. The resulting excess of enophile or enophile/dienophile mixture helps to reduce the amount of unreacted natural oil thereby limiting the tendency to produce exudate.

In still other embodiments, the natural oil is maleated with at least 0.02 moles of the enophile or enophile/dienophile mixture per mole of natural oil. In another embodiment the natural oil is maleated with at least 0.5 moles of the enophile or enophile/dienophile mixture per mole of natural oil, while in other embodiments, the natural oil is maleated with more than about 1 mole of the enophile or enophile/dienophile mixture per mole of natural oil. In further embodiments, the natural oil is maleated with no more than 2.5 moles of the enophile or enophile/dienophile mixture per mole of natural oil, while in other embodiments, the natural oil is maleated with no more than 2.25 moles of the enophile or enophile/dienophile mixture per mole of natural oil, while in still other embodiments, the natural oil is maleated with no more than 2 moles of the enophile/dienophile mixture per mole of natural oil. In one embodiment, the enophile used is maleic anhydride.

According to one particular embodiment, the maleated natural oil is a maleated alkyl ester of a fatty acid or a maleated synthetic triglyceride of a natural fatty acid.

The maleated natural oil is then reacted with a compound comprising at least one polyetheramine to form the maleated natural oil derivative.

The polyetheramine may be a mono-, di-, tri-, tetra- or multifunctional polyetheramine. Methods for preparing polyetheramines are well known and can be found at, for example, U.S. Pat. Nos. 3,654,370, 3,832,402, 4,990,476 and 4,992,590. In general, polyetheramines may be produced by alkoxylating a mono-, di-, tri-, tetra- or multifunctional alcohol or alkyl phenol with an alkylene oxide, such as ethylene oxide, propylene oxide, butylene oxide or mixtures thereof, to form an alkylene oxide adduct, and then catalytically aminating the alkylene oxide adduct in the presence of hydrogen and ammonia to form the polyetheramine. In some embodiments, the polyetheramine may be initialized by an amine which is alkoxylated and then aminated.

According to one embodiment, the polyetheramine is a polyether monoamine having the formula (1) or (1a): 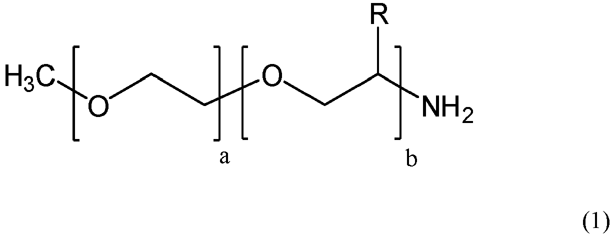
where R is hydrogen or methyl, and
a and b independently are integers from about 1 to about 150; 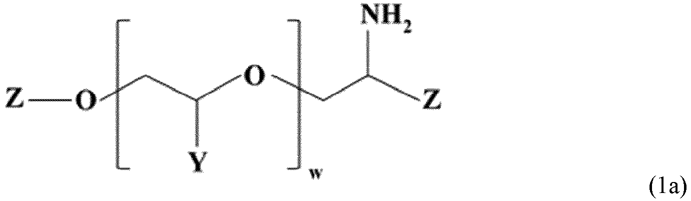
where Y is hydrogen or methyl,
Z is a C₁-C₄₀ alkyl group or a C₁-C₄₀ alkyl phenol group and
w is an integer from about 1 to about 100.

In another embodiment, the polyetheramine is a polyether monoamine having the formula (2) or (2a):

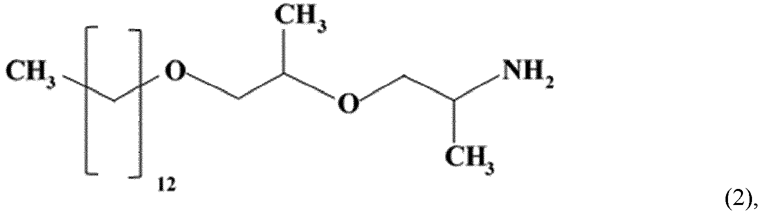

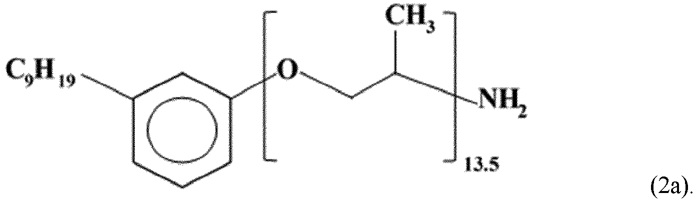

Commercially available polyether monoamines include the JEFFAMINE® M-series and XTJ-series amines, including, but not limited to, JEFFAMINE® M-600, M-1000, M-2005, M-2070, XTJ-435 and XTJ-436 amines, available from Huntsman Corporation.

In another embodiment, the polyetheramine is a polyether diamine having the formula (3), (4) or (5): 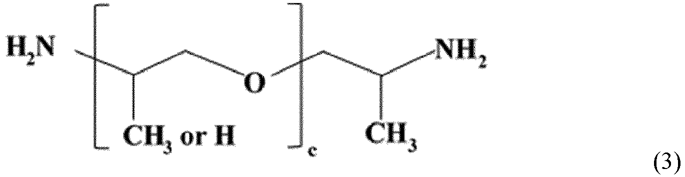
where c is an integer from about 2 to about 100; 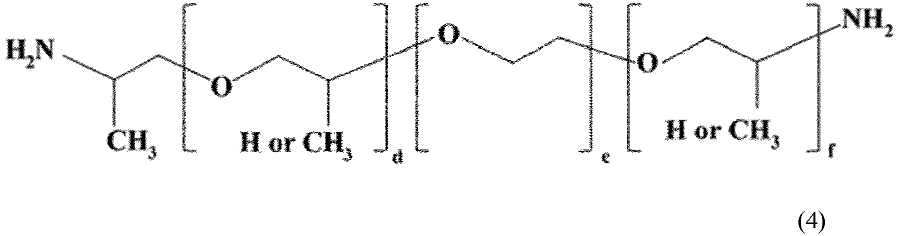
where e is an integer from about 2 to about 40, and
d and f independently are integers from about 1 to about 10; 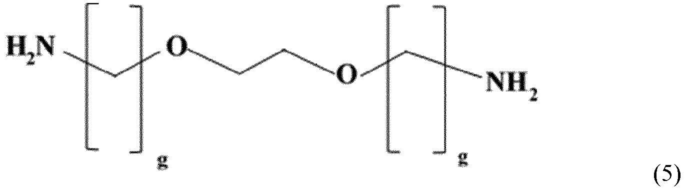
where g is an integer from about 2 to about 3.

Commercially available polyether diamines include the JEFFAMINE® D, ED and EDR amines, including, but not limited to, JEFFAMINE® D-200, D-400, D-2000, D-4000, ED-600, ED-900, ED-20003, EDR-148 and EDR-176 amines, available from Huntsman Corporation.

In yet another embodiment, the hydrophilic polyetheramine is a polyether triamine having the formula (6): 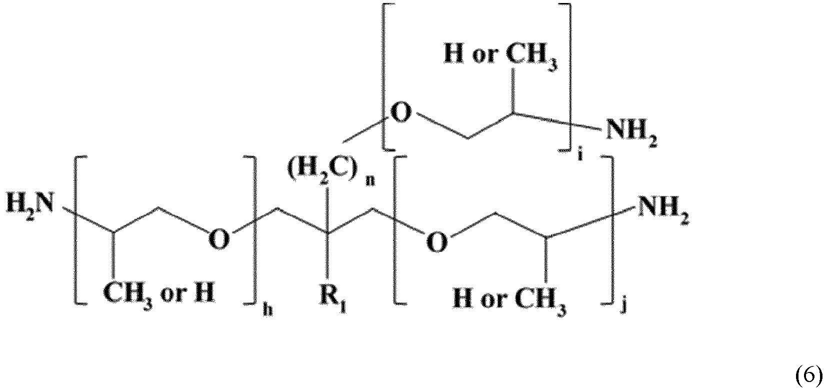
where R₁ is hydrogen, methyl or ethyl,
n is an integer of 0 or 1, and
h, i and j independently are integers from about 1 to about 100.

Commercially available triamines include the JEFFAMINE® T-series amines, including, but not limited to, JEFFAMINE® T-403, T-3000 and T-5000 amines, available from Huntsman Corporation.

In still another embodiment, the hydrophilic polyetheramine is a polyether tetra-amine having the formula: 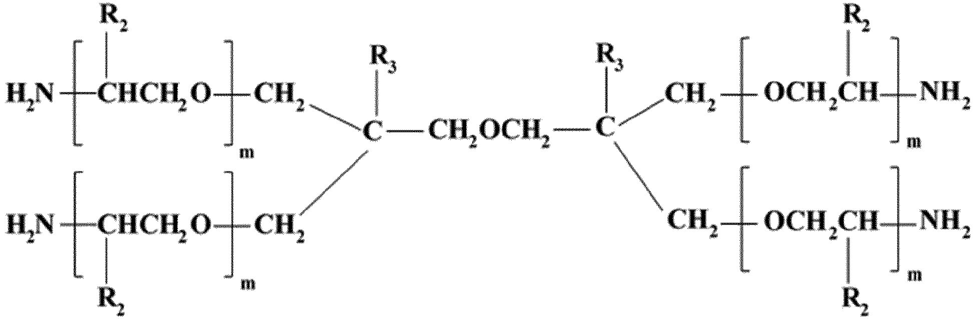
where each R₂ is independently hydrogen, methyl or ethyl,
R₃ is a C₁- C₅ alkyl group, and
each M independently is an integer from about 2 to about 50.

In still another embodiment, the polyetheramine is a multifunctional polyetheramine. The multifunctional polyetheramine of the present disclosure may be a polyether di-, tri or tetra-amine, such as those described herein, having at least one of the hydrogens of the amine groups replaced by a hydroxyl group. For example, the multifunctional polyetheramine may have the formula (8): 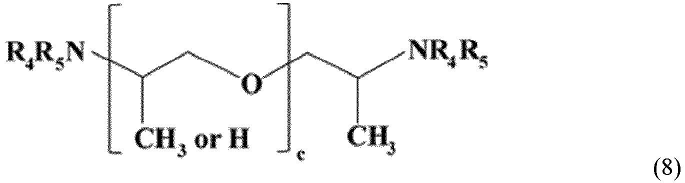 where each R₄ and R₅ are independently hydrogen or a hydroxyl group, with the proviso that at least one of R₄ is a hydrogen and at least one of R₅ is a hydroxyl group.

The molar ratio of maleated natural oil to compound comprising at least one polyetheramine is greater than 1.1:1, in other embodiments from 1.8 to 10:1, and even from 2.0 to 7.5:1, while in still other embodiments from 2.5 to 5:1 and further from 3.0 to 3.5:1.

The reaction of the maleated natural oil and the compound comprising at least one polyetheramine can proceed without special considerations and is known to those skilled in the art. In general, it may proceed at a temperature range between about 20°C to about 260°C and at a pressure range between about 1 to about 10 atm (0.1 to 1 MPa) in the presence or absence of common phenol based antioxidants such as 2,6-di-tert-butylphenol, 2,6-di-tert-butyl-4-methylphenol, 2,5-di-tert-butylhydroquinone, polyisobutylene phenol, tocopherol (Vitamin E family) and the like and mixtures thereof. Lewis acid catalysts may be used to improve the reaction rate, but no catalysts are generally used.

In some embodiments, the adjuvant composition may consist of the maleated natural oil while in other embodiments the adjuvant composition may comprise the maleated natural oil and an auxiliary component. In some embodiments, a portion or all of the auxiliary component(s) may instead be added during the formation of the agrochemical formulation described below.

Examples of auxiliary components include, but are not limited to, solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, crystallization inhibitors, anti-foaming agents, colorants, tackifiers, binders, preservatives, inorganic or organic acids to neutralize the pH, clarifiers, stabilizers, fertilizers, such as ammonium sulfate, urea or compound fertilizers, for example phosphorus-, potash- and nitrogen-based compound fertilizers, such as P,K,N fertilizers, UV stabilizers and mixtures thereof.

Solvents and liquid carriers can be water and organic solvents, such as: mineral oil fractions of medium to high boiling point, for e.g. kerosene, diesel oil; natural oils such as those described above and biodiesel oil; aliphatic, cyclic and aromatic hydrocarbons, for e.g. toluene, paraffin, tetrahydronaphthalene, alkylated naphthalenes; alcohols, for e.g. ethanol, propanol, butanol, benzylalcohol, cyclohexanol; glycols; DMSO; ketones, for e.g. cyclohexanone; esters, for e.g. lactates, carbonates, fatty acid esters, gamma-butyrolactone; fatty acids; phosphonates; amines; amides, for e.g. N-methylpyrrolidone, fatty acid dimethylamides; and mixtures thereof. In one embodiment, the solvent is an organic solvent.

Crystallization inhibitors can be polyacrylic acids and their salts, whereas the latter are preferred. The salts of polyacrylic acids may be ammonium, primary, secondary or tertiary ammonium derivatives, or alkali metal salts (e.g. sodium, potassium, lithium ions), wherein alkali metal salts such as sodium salts are preferred in an embodiment. The polyacrylic acids and their salts usually have a molecular weight (as determined by GPC, calibration with polystyrene sulphonates) of 1000 Da to 300 kDa, alternatively of 1000 Da to 80 kDa, and in particular 1000 Da to 15 kDa. The crystallization inhibitors are usually water-soluble, for e.g. at least 1 g/l, alternatively at least 10 g/l, and in particular at least 100 g/l at 20°C.

Solid carriers or fillers can be mineral earths, for e.g. silicates, silica gels, talc, kaolins, limestone, lime, chalk, clays, dolomite, diatomaceous earth, bentonite, calcium sulfate, magnesium sulfate, magnesium oxide, polysaccharide powders, for e.g. cellulose, starch, products of vegetable origin, for e.g. cereal meal, tree bark meal, wood meal, nutshell meal, and mixtures thereof.

Examples of emulsifiers which may be used are calcium salts of alkylarylsulfonic acid, such as calcium dodecylbenzenesulfonate, or nonionic emulsifiers such as fatty acid polyglycol esters, alkylaryl polyglycol ethers, fatty alcohol polyglycol ethers, propylene oxidelethylene oxide condensates, alkyl polyethers, sorbitan esters such as, for example, sorbitan fatty acid esters, or polyoxyethylene sorbitan esters such as, for example, polyoxyethylene sorbitan fatty acid esters.

Surfactants are surface-active compounds, such as anionic, cationic, nonionic and amphoteric surfactants, block polymers, polyelectrolytes, and mixtures thereof. Such surfactants can be used as an emulsifier, dispersant, solubilizer, wetter, penetration enhancer or protective colloid. Examples of surfactants are listed in McCutcheon's, Vol.1: Emulsifiers & Detergents, McCutcheon's Directories, Glen Rock, USA, 2008 (International Ed. or North American Ed.).

Anionic surfactants include alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignin sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Nonionic surfactants include alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar- based surfactants are sorbitans, ethoxylated sorbitans, sucrose and glucose esters. Examples of polymeric surfactants are homo- or copolymers of vinylpyrrolidone, vinylalcohols, or vinylacetate.

Cationic surfactants include quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Thickeners include polysaccharides (e.g. xanthan gum, carboxymethylcellulose), organic clays (organically modified or unmodified), polycarboxylates, and silicates.

Bactericides include bronopol and isothiazolinone derivatives such as alkylisothiazolinones and benzisothiazolinones.

Anti-freezing agents include ethylene glycol, propylene glycol and glycerin.

Anti-foaming agents include silicones, long chain alcohols, and salts of fatty acids. Preferred anti-foaming agents are silicones, such as polydimethylsiloxane.

Colorants (e.g. in red, blue, or green) include pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Tackifiers or binders include polyvinylpyrrolidone, polyvinylacetates, polyvinyl alcohols, polyacrylates, biological or synthetic waxes, and cellulose ethers.

Anti-drift agents are, for example, nonionic polymers, such as polyacrylamides, polyethylene glycols, or guar gum with a molecular weight of at least 20 kDa, preferably at least 50 kDa, and in particular at least 100 kDa. Further examples for anti-drift agents are lecithin and self emulsifiable polyesters.

Humectants are typically compounds, which attract and/or keep water within the adjuvant composition. Examples include glycerol or sugar syrups.

As described above, the adjuvant composition enhances the bioactivity of a pesticide, thus the adjuvant composition is a composition wherein, when combined with a pesticide or mixture of pesticides and applied to a target substrate, achieves at least 60%, 65%, 70%, 75%, 80%, or even at least 85%, or even at least 90% control. "% control," as used herein, refers to any observable measure of control of target substrate growth, which can include one or more of the actions of (1) killing, (2) inhibiting growth, reproduction or proliferation, and (3) removing, destroying, or otherwise diminishing the occurrence and activity of pests. Control can be measured by any of the various methods known in the art.

In some embodiments, at least 80% control is achieved no greater than 5, 10, 15, 20, 25 or 30 days after application of the adjuvant compositions and pesticide or mixture of pesticides to the target substrate.

### Formulating the Adjuvant Composition

To make adjuvant compositions of the present disclosure, the individual components disclosed above are provided and combined together by customary methods, for example, mixing by dissolving the individual components in any suitable vessel or container, preferably at room temperature. The relative levels of the components are selected to give the required performance with an eye toward making sure on the one hand that a component is present at a sufficient level to be effective, but on the other hand that excessive cost is avoided by limiting the upper range of the component. The order of mixing the components is not particularly important and generally the individual components can be added sequentially or all at once.

Thus, in one embodiment, the maleated natural oil derivative and optional auxiliary components are combined together to form an adjuvant composition. According to some embodiments, the adjuvant composition includes at least about 10% by weight, and further at least about 50% by weight, and still further at least about 75% by weight, and even further at least about 90.5% by weight, and still even further at least about 99% by weight of the maleated natural oil derivative where the % by weight is based on the total weight of the adjuvant composition. In another embodiment, the adjuvant composition includes less than about 90% by weight, and further less than about 75% by weight, and still further less than about 45% by weight and still even further less than about 29.5% by weight of the maleated natural oil derivative, where the % by weight is based on the total weight of the adjuvant composition.

In still another embodiment, the adjuvant composition includes (i) about 0.1-99.9% by weight of the maleated natural oil derivative and (ii) about 0.1-99.9% by weight of an auxiliary component, where the % by weight is based on the total weight of the adjuvant composition. In another embodiment, the adjuvant composition includes (i) about 0.1-50% by weight of the maleated natural oil derivative and (ii) about 0.1-50% by weight of the auxiliary component, where the % by weight is based on the total weight of the adjuvant blend. In yet a further embodiment, the adjuvant composition includes (i) about 0.1-29.9% by weight of the maleated natural oil derivative and (ii) about 70.1-99.9% by weight of an auxiliary component, where the % by weight is based on the total weight of the adjuvant composition.

### Agrochemical Formulation

Another object of the present disclosure is directed to an agrochemical formulation comprising a pesticide and the adjuvant composition of the present disclosure (and auxiliary component(s) in embodiments where such auxiliary component(s) are not included in formulating the adjuvant composition). The agrochemical formulation may be used in treating target substrates such as those disclosed above and refers to all forms of compositions including concentrates and spray formulations. "Spray formulations" are aqueous agrochemical formulations including all the components which it is desired to apply to the target substrate or their environment in a form and at a concentration (dilution) appropriate for spraying. Spray formulations can be made up by simple dilution of concentrates containing desired components (other than water), or by mixing of the individual components, or a combination of diluting a concentrate and adding further individual components or mixtures of components. Typically such end use mixing is carried out in the spray tank from which the formulation is sprayed or a holding tank for filling the spray tank and commonly such mixing and mixtures are called tank mixing and tank mixtures. "Concentrates" are agrochemical formulations, which may be aqueous or non-aqueous, and which are designed to be diluted with water (or a water based liquid) to form the corresponding spray formulations and include such compositions in liquid form such as solutions, emulsions or dispersions and in solid form, especially in water dispersible solid form, such as granules or powders. "Emulsifiable concentrates" are liquid "concentrates" including the pesticide and adjuvant composition in solution or dispersion, usually also including an emulsifier and/or surfactant, which readily emulsify on dilution in water, typically with no more than gentle stirring.

The agrochemical formulations according to the present disclosure may be prepared by customary processes, for example mixing by grinding, dissolving or dispersing the individual components, preferably at room temperature. If other formulation auxiliary components are present, they are preferably likewise incorporated at room temperature. In general, the sequence in which the individual components are added is of no decisive importance. Thus, in one embodiment, the adjuvant composition disclosed above may be formulated in a container, for example, in a stainless steel tank, steel, tin, aluminum can, plastic or glass bottle and paper or cardboard container. The adjuvant composition may then be combined with a pesticide and water and/or other solvent and in some embodiments an auxiliary component to form an agrochemical formulation in the field just prior to application.

The presently described adjuvant composition is not limited for use with any particular class of pesticides. An agrochemical formulation of the presently described technology can comprise a pesticide or a mixture of pesticides.

In one embodiment, the pesticide includes any chemical or biological agent (i.e. "active ingredient") used in preventing, destroying, repelling, or mitigating a pest. Thus, in one particular embodiment, the pesticide is a fungicide, herbicide, insecticide, algicide, molluscicide, miticide, rodenticide, growth regulator or insect repellant.

According to one embodiment, the pesticide is a fungicide. Examples of fungicides include, but are not limited to: azoxystrobin, trifloxystrobin, kresoxim methyl, famoxadone, metominostrobin and picoxystrobin, carbendazim, thiabendazole, dimethomorph, vinclozolin, iprodione, dithiocarbamate, imazalil, prochloraz, fluquinconazole, epoxiconazole, flutriafol, azaconazole, bitertanol, bromuconazole, cyproconazole, difenoconazole, hexaconazole, paclobutrazole, propiconazole, tebuconazole, triadimefon, trtiticonazole, fenpropimorph, tridemorph, fenpropidin, mancozeb, metiram, chlorothalonil, thiram, ziram, captafol, captan, folpet, fluazinam, flutolanil, carboxin, metalaxyl, bupirimate, ethirimol, dimoxystrobin, fluoxastrobin, orysastrobin, metominostrobin, prothioconazole, 8-(2,6-diethyl-4-methylphenyl)tetrahydropyrazolo [1,2-d][1,4,5]oxadiazepine-7,9-dione, 2,2, -dimethyl-propionic acid-8-(2,6-diethyl-4-methyl-phenyl)-9-oxo-1,2,4,5-tetrahydro-9H-pyrazolo-[1,2 d][1,4,5]oxadiazepine-7-yl ester and metalaxyl.

In another embodiment, the pesticide is a herbicide. Examples of herbicides include, but are not limited to: fluzifop, mesotrione, fomesafen, tralkoxydim, napropamide, amitraz, propanil, cyprodanil, pyrimethanil, dicloran, tecnazene, toclofos methyl, flamprop M, 2,4-D, MCPA, mecoprop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyclodim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron, metoxuron, N-phosphonomethylglycine and its salts (glyphosate), glufosinate, chlormequat chloride, paraquat, diquat, trifloxysulfuron, fomesafen, mesotrione and fenuron.

In still another embodiment, the pesticide is an insecticide. Examples of insecticides include, but are not limited to: abamectin, acephate, acetamiprid, acrinathrin, alanycarb, aldicarb, allethrin, alpha-cypermethrin, amitraz, asulam, azadirachtin, azamethiphos, azinphos-ethyl, azinphos-methyl, bendiocarb, benfuracarb, bensultap, beta-cyfluthrin, beta-cypermethrin, bifenthrin, bioallethrin, bioresmethrin, bistrifluron, borax, buprofezin, butoxycarboxim, cadusafos, carbaryl, carbofuran, chlorpropham, clothianidin, cyfluthrin, cyhalothrin, cyprmethrin, deltamethrin, diethofencarb, diflubenzuron, dinotefuran, emamectin, endosulfan, fenoxycarb, fenthion, fenvalerate, fipronil, halfenprox, heptachlor, hydramethylnon, imidacloprid, imiprothrin, isoprocarb, lambda cyhalothrin, methamidophos, methiocarb, methomyl, nitenpyram, omethoate, permethrin, pirimicarb, pirimiphos methyl, propoxur, tebufenozide, thiamethoxam, thiodicarb, triflumoron, and xylylcarb.

In a further embodiment, the pesticide is an algicide. Examples of algicides include, but are not limited to: bethoxazin, copper dioctanoate, copper sulfate, cybutryne, dichlone, dichlorophen, endothal, fentin, hydrated lime, nabam, quinoclamine, quinonamid, simazine, triphenyltin acetate, and triphenyltin hydroxide.

In another embodiment, the pesticide is a molluscicide. Examples of moluscicides include, but are not limited to: metaldehyde, methiocarb and aluminum sulfate.

In yet another embodiment, the pesticide is a miticide. Examples of miticides include, but are not limited to: antibiotic miticides, carbamate miticides, formamidine miticides, mite growth regulators, organochlorine, permethrin and organophosphate miticides.

In still another embodiment, the pesticide is a rodenticide. Examples of rodenticides include, but are not limited to: 2-isovalerylindan-1, 3-dione, 4-(quinoxalin-2-ylamino)benzenesulfonamide, alpha-chlorohydrin, aluminium phosphines, anta, arsenics oxide, barium carbonate, bisthiosemi, brodifacoum, bromadiolone, bromethalin, calcium cyanide, chloralose, chlorophacinone, cholecalciferol, coumachlor, coumafuryl, coumatetralyl, crimidine, difenacoum, difethialone, diphacinone, ergocalciferol, flocoumafen, fluoroacetamide, flupropadine, flupropadine hydrochloride, gamma-HCH, HCH, hydrogen cyanide, iodomethane, lindane, magnesium phosphide, methyl bromide, norbormide, phosacetim, phosphine, phosphorus, pindone, potassium arsenite, pyrinuron, scilliroside, sodium arsenite, sodium cyanide, sodium fluoroacetate, strychnine, thallium sulfate, warfarin, and zinc phosphide.

In another embodiment, the pesticide is a growth regulator. Examples include, but are not limited to, abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid, maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid, trinexapac-ethyl and uniconazole.

In an additional embodiment, the pesticide is an insect repellant. Examples of insect repellants, include, but are not limited to: 2-ethyl-1,3-hexanediol; N-octyl bicycloheptene dicarboximide; N,N-diethyl-M-toluamide; 2,3:4,5-Bis (2-butylene) tetrahydro-2-furaldehyde; Di-n-propyl isocinchomeronate; and 2-hydroxyethyl-n-octyl sulfide.

The amount of pesticide included in the agrochemical formulation of the present disclosure will vary according to a number of parameters such as the target substrate to be treated, the area to be treated, etc. In general, a rate of application from about five grams to about four kilograms per hectare (g/ha) of pesticide may be suitable. The amount of the adjuvant composition in the agrochemical formulation may be from about 0.01-99% by weight, based on the total weight of the agrochemical formulation.

The agrochemical formulations of the present disclosure may be used in conventional agricultural methods. For example, the pesticide or mixture of pesticides and adjuvant composition may be mixed with water and/or other solvent(s) and/or fertilizers and applied post-emergence to a desired target substrate by any means, such as airplane spray tanks, knapsack spray tanks, cattle dipping vats, farm equipment used in ground spraying (e.g., boom sprayers, hand sprayers), and the like.

As discussed above, in accordance with some embodiments, the agrochemical formulation can be a concentrate composition, which can be diluted in a suitable volume of water to form a spray formulation (e.g., a tank mix composition) for applying to the target substrate. The concentrate composition can be in liquid, solid, or semi-solid form. In at least one embodiment, it is an aqueous concentrate composition.

For example, in one embodiment, the amount of the pesticide in the concentrate composition can be from about 1% by weight to about 80% by weight, alternatively from about 16% by weight to about 60% by weight, alternatively from 35% by weight to about 55% by weight, based on the total weight of the concentrate composition. The amount of the adjuvant composition in the concentrate composition may be from about 0.0001% by weight to about 20% by weight, alternatively between from about 0.001% by weight to about 15% by weight, or alternatively from about 0.01% by weight to about 10% by weight percent, or alternatively from about 0.1% by weight to about 5% by weight, or even alternatively from about 0.5% by weight to about 3% by weight, based on the total weight of the concentrate composition.

The concentrate composition can be diluted by a user with water to render a spray formulation containing from about 0.01% by weight to about 15% by weight, alternatively from about 0.1% by weight to about 5% by weight, alternatively from about 0.2% by weight to about 2% by weight of the pesticide, based on the total weight of the spray formulation. The spray formulation can typically contain from about 0.0001% by weight to about 3% by weight, alternatively from about 0.001% by weight to about 1% by weight, alternatively from about 0.01% by weight to about 0.5% by weight percent of the adjuvant composition of the present disclosure.

In some other embodiments of the present disclosure, the pesticide and adjuvant composition are combined to form a "ready-to-use" (RTU) spray formulation. The RTU spray formulation can be prepared by a user by diluting a concentrate composition as described above, or alternatively can be provided to the user as is. For example, the RTU spray formulation can contain from about 0.5% by weight to about 5% by weight, alternatively from about 0.75% by weight to about 3% by weight, alternatively from about 1.5% by weight to about 2.5% by weight of the pesticide, based on the total weight of the RTU spray formulation. The RTU spray formulation can contain from about 0.01% by weight to about 2.5% by weight, alternatively from about 0.2% by weight to about 2% by weight, alternatively from about 0.5% by weight to about 1% by weight of the adjuvant composition of the present disclosure. The balance of the RTU composition can be water.

In accordance with another embodiment, the presently described technology provides a method for killing or inhibiting or repelling a pest comprising the steps of providing a pesticide or a mixture of pesticides in a pesticidally effective amount; providing an effective amount of an adjuvant composition of the present disclosure, combining the pesticide or mixture of pesticides with the adjuvant composition to prepare an agrochemical formulation, and contacting the agrochemical formulation and the pest.

### Examples

### Example 1: Maleated natural oils

In a representative experiment, 1029 g of soybean oil was heated to 80°C and 183 g of molten maleic anhydride (15% wt/wt of the total reaction) was added, along with 6 g of toluene. The mixture was heated to 200°C for 5 hours in a round bottom flask equipped with a stir bar and a reflux condenser, and the toluene was then removed under reduced pressure to yield maleated soybean oil (MASBO-15). Similar experiments were carried out to yield MASBO-5, MASBO-10, MASBO-20, and MASBO-25, where the number corresponds to the weight percent of maleic anhydride that was reacted onto the soybean oil. Other derivatives were similarly synthesized using different oils where the oil was either linseed oil (MALSO-#) or glycerol trioleate, a synthetic triglyceride made from glycerol and oleic acid (MAGTO-#).

### Example 2: Amine-modified maleated oils

In a representative experiment, MASBO-15 (407.5 g) was added to a round-bottom flask and heated to 40°C. Then, 623.0 g of JEFFAMINE® M-1000 polyetheramine was added while stirring. This mixture was stirred for 2 hours at 40°C, and then 257.4 g of 2-butoxyethanol was added as a solvent to give MASBO-15A. When diluted into water, MASBO-15A formed a microemulsion. Other amines were reacted in a similar manner to yield the products listed in Table 1 below.

Example 3: mPEG-modified maleated oils (not according to the invention)

In a representative experiment, MASBO-20 (50.0 g) was added to a round-bottom flask and heated to 50°C. Then, 66.0 g mPEG-650, a 650 MW monomethyl polyethylene glycol, was added and the reaction was stirred and heated to 80°C for 2 hours. Upon cooling, the product was a waxy solid that slowly dispersed to form a microemulsion in water (MASBO-20A). Other mPEGs were reacted in a similar manner to yield the products listed in Table 1 below.

A summary of the compounds that were made and how they behaved when diluted into WHO 342 ppm water are shown below.

**Table 1 key: JAM-2070 = JEFFAMINE® M-2070, JAM-600 = JEFFAMINE® M-600, JAM-1000 = JEFFAMINE® M-1000, MEA = monoethanolamine, DGA = diglycolamine, APM = aminopropylmorpholine, mPEG-# = methylated polyethylene glycol of the specified molecular weight, PAG-1800 = JEFFOX® WL660, a PEG/PPG block copolymer, 2-EH = 2-ethylhexanol, EGBE = ethylene glycol butyl ether, PGBE = propylene glycol butyl ether, MSO = methyl soyate, L12-6 = SURFONIC® L12-6, L24-4 = SURFONIC® L24-4, Ca-DDBS = NANSA® EVM 70/2E, DOSS = SURFONIC® DOSS-75PG. Compositions not comprising a reaction product of a maleated oil with a polyetheramine are not according to the present invention.**

| **Table 1 - Maleated oil derivatives and their properties** | | | | | | | |
|---|---|---|---|---|---|---|---|
| **Name** | **Amine(s)** | **Alcohol** | **solvent diluent (%)** | **Cosurfactant (%)** | **Physical state at RT** | **Spontaneity into water** | **Emulsion type in WHO 342 ppm water** |
| MASBO-5A | - | mPEG-1200 | - | - | waxy solid | poor | none |
| MASBO-5B | - | mPEG-3000 | - | - | waxy solid | poor | none |
| MABO-5C | JAM-1000 | - | - | - | waxy solid | poor | none |
| MASBO-10A | JAM-2070 | - | butanol (20) | - | liquid | good | microemulsion |
| MASBO-10B | JAM-1000 | - | butanol (24) | - | viscous liquid | good | microemulsion |
| MASBO-10C | - | mPEG-1000 | butanol (20) | - | viscous liquid | good | microemulsion |
| MASBO-10D | APM | - | PGBE(20) | - | liquid | poor | macroemulsion |
| MASBO-10E | DGA + JAM-1000 | - | PGBE(20) | Ca-DDBS(10) | viscous liquid | good | macroemulsion |
| MASBO-10F | | PAG-1800 | - | - | visclous liquid | excellent | microemulsion |
| MASBO-10G | MEA + JAM-600 | - | 2-EH (30) | - | liquid | poor | none |
| MASBO-10H | JAM-1000 + JAM-600 | - | 2-EH (30) | - | liquid | good | macroemulsion |
| MASBO-10I | JAM-1000 + JAM-600 | - | paraffin oil (30) | - | liquid | poor | macroemulsion |
| MASBO-10J | JAM-1000 + JAM-600 | - | - | L12-6 (20) | liquid | good | microemulsion |
| MASBO-10K | JAM-600 | - | - | L12-6 (20) | liquid | good | microemulsion |
| MASBO-10L | JAM-600 | - | - | L24-4 (20) | liquid | good | microemulsion |
| MASBO-10M | DGA + JAM-600 | - | - | L12-6 (20) | liquid | good | macroemulsion |
| MASBO-10N | JAM-2070+JAM-600 | - | - | L12-6 (20) | viscous liquid | excellent | microemulsion |
| MASBO-10O | DGA + JAM-600 | - | - | DOSS (20) | liquid | poor | macroemulsion |
| MASBO-10P | DGA + JAM-2070 | - | 2EH(15) | DOSS (20) | viscous liquid | excellent | macroemulsion |
| MASBO-15A | MEA + JAM-1000 | - | EGBE(20) | - | liquid | poor | microemulsion |
| MASBO-15B | JAM-1000 + JAM-600 | - | EGBE(20) | - | liquid | excellent | microemulsion |
| MASBO-15C | JAM-1000 + JAM-600 | - | 2-EH (30) | - | liquid | poor | none |
| MASBO-15D | JAM-2070 + JAM-600 | - | EGBE(20) | - | liquid | good | macroemulsion |
| MASBO-15E | JAM-2070 + JAM-600 | - | MSO (20) | - | liquid | poor | microemulsion |
| MASBO-15F | JAM-2070 + JAM-600 | - | MSO (20) | Ca-DDBS (10) | liquid | good | microemulsion |
| MASBO-15G | MEA + JAM-600 | - | MSO(30) | - | liquid | poor | none |
| MASBO-15H | MEA + JAM-2070 | - | 2EH (30) | - | liquid | good | microemulsion |
| MASBO-15I | MEA + JAM-2070 | - | 2EH (15) | DOSS (10) | liquid | excellent | microemulsion |
| MASBO-15J | MEA + JAM-2070 | - | MSO (30) | - | viscous liquid | poor | microemulsion |
| MASBO-15K | MEA + JAM-2070 | - | MSO (30) | DOSS (10) | viscous liquid | good | microemulsion |
| MASBO-15L | DMAPA | - | - | - | waxy gel | poor | microemulsion |
| MASBO-15M | - | mPEG-650 | - | - | waxy solid | poor | microemulsion |
| MASBO-20A | - | mPEG-650 | - | - | waxy solid | poor | microemulsion |
| MASBO-20B | - | mPEG-350 | MSO (20) | - | viscous liquid | poor | none |
| MASBO-20C | - | mPEG-350 | xylenes (20) | - | liquid | poor | none |
| MASBO-20D | - | mPEG-350 | butanol (20) | - | liquid | excellent | microemulsion |
| MASBO-20E | - | mPEG-650 | butanol (20) | - | viscous liquid | excellent | microemulsion |
| MASBO-20F | JAM-1000 | - | butanol (20) | - | viscous liquid | poor | microemulsion |
| MASBO-20G | APM | - | diglyme(20) | - | viscous liquid | poor | microemulsion |
| MASBO-25A | - | mPEG-350 | - | - | viscous liquid | poor | macroemulsion |
| MALSO-15 | MEA + JAM-2070 | - | 2-EH (30) | - | liquid | good | microemulsion |
| MAGTO-15 | MEA + JAM-2070 | - | 2-EH (30) | - | liquid | excellent | microemulsion |

### Field Trials

Field trials are necessary to test the ability of the new adjuvants to increase the efficacy of pesticides. Sample MASBO-10N was used in a field trial to test its adjuvancy with two different herbicide systems (glyphosate, supplied as Touchdown HiTech® from Syngenta Corporation, and dicamba, supplied as Clarity® from BASF Corporation) against other common adjuvants known to those skilled in the art. The results are shown below in Table 2.

| | **Table 2: MASBO-10N Field Trial with glyphosate + dicamba herbicides** | | | | | | | |
|---|---|---|---|---|---|---|---|---|
| | **Amaranth** | | **Quinoa** | | **Canola** | | **Soybean** | |
| | **14 D** | **28 D** | **14 D** | **28 D** | **14 D** | **28 D** | **14 D** | **28 D** |
| glyphosate + dicamba | 56.7 bc | 48.3 cde | 50 i | 53.3 h | 25 ijk | 45 i | 96.3 a | 99 a |
| gly/dic + NIS | 56.7bc | 53.3 a-e | 75 ab | 88.3 a-e | 71.7 ab | 70 abc | 94.7 a | 99 a |
| gly/dic + MOC | 60 abc | 55 a-d | 63.3 c-h | 88.3 a-e | 51.7 d-g | 66.7 bcd | 93 a | 99 a |
| gly/dic + HSMOC | 60 abc | 51.7 a-e | 68.3 b-e | 90 a-d | 63.3 bc | 65 bcd | 91.7 a | 99 a |
| **gly/dic + MASBO-10N** | 55 bc | 56.7 a-d | 66.7 b-f | 88.3 a-e | 65 bc | 66.7 bcd | 97.7 a | 99 a |
| gly/dic + COC | 60 abc | 53.3 a-e | 63.3 c-h | 81.7 d-g | 56.7 c-f | 63.3 cde | 99 a | 99 a |
| | *Herbicides used at half the recommended rates, means followed by same letter do not significantly differ (P=0.05, LSD) | | | | | | | |
| | NIS = nonionic surfactant, MOC = methylated seed oil concentrate, HSMOC = high surfactant methylated seed oil concentrate, COC = crop oil concentrate | | | | | | | |

As shown in Table 2, MASBO-10N was able to increase the efficacy of the herbicide system (vs. the control) and compared favorably with many standard adjuvants. This indicates that maleated natural oil derivatives of the present disclosure have great utility as adjuvant compositions for use with pesticides. Due to their comparative ease of manufacture and formulation, they may be more advantageous than similarly performing adjuvants.

Table 3 contains the results of another field trial using glyphosate and saflufenacil, a common herbicide combination (glyphosate supplied as Touchdown HiTech® from Syngenta Corporation, and saflufenacil supplied as Laudis® from Bayer CropScience).

| | **Table 3: MASBO-10N field trial with glyphosate +saflufenacil herbicides** | | | | | | | |
|---|---|---|---|---|---|---|---|---|
| | **flax** | | **amaranth** | | **quinoa** | | **soybean** | |
| | **14 D** | **28 D** | **14D** | **28D** | **14D** | **28D** | **14D** | **28D** |
| glyphosate + saflu. | 20 de | 35 de | 58.3abc | 58.3a | 16.7hi | 15 n | 25 b | 15 j |
| gly/saf + NIS | 28.3 bcd | 51.7 b-e | 51.7 bc | 58.3a | 61.7 b-f | 71.7 de | 40 a | 71.7 fg |
| gly/saf + MOC | 25 abc | 50 b-e | 60 abc | 60 a | 55 def | 71.7 de | 40 a | 85 a-d |
| gly/saf + HSMOC | 35 bc | 58.3 a-e | 51.7 bc | 50 a | 73.3 a-d | 83.3 abc | 38.3 a | 85 a-d |
| gly/saf + MASBO-10N | 53.3 bc | 71.7 abc | 51.7 bc | 51.7 a | 83.3 a | 83.3 abc | 40 a | 78.3 de |
| gly/saf + COC | 33.3 bcd | 61.7 a-d | 45 c | 51.7 a | 58.3 c-f | 61.7 ghi | 40 a | 78.3 de |
| | *Herbicides used at half the recommended rates, means followed by same letter do not significantly differ (P=0.05, LSD) NIS = nonionic surfactant, MOC = methylated seed oil concentrate, HSMOC = high surfactant methylated seed oil concentrate, COC = crop oil concentrate | | | | | | | |

In Table 3 the MASBO derivative again improves the efficacy of the herbicides and compares favorably with other well-known adjuvant classes. This indicates that maleated natural oil derivatives of the present disclosure have great utility as adjuvant compositions for use with pesticides. Due to their comparative ease of manufacture and formulation, they may be more advantageous than similarly performing adjuvants.

Table 4 shows the comparison of a different variation of the MASBO adjuvant, MASBO-15B with glyphosate and saflufenacil, the same herbicides used in Table 3. In this example there is no co-surfactant formulated with the MASBO, and the performance still compares favorably, working as well as or better than many well-known adjuvants. This indicates that maleated natural oil derivatives of the present disclosure have great utility as adjuvant compositions for use with pesticides. Due to their comparative ease of manufacture and formulation, they may be more advantageous than similarly performing adjuvants.

| **Table 4: MASBO-15B field trial with glyphosate + saflufenacil herbicides** | | | | | | | | |
|---|---|---|---|---|---|---|---|---|
| | **Flax** | | **Amaranth** | | **Quinoa** | | **Fagopyrum** | |
| **Treatment** | 14 D | 28 D | 14 D | 28 D | 14 D | 28 D | 14 D | 28 D |
| glyphosate + COC | 23.3 h | 23.3 h | 50 g | 60 f | 45 g | 45 h | 51.7 c | 55 f |
| glyphosate + MOC | 21.7 h | 45 ef | 46.7 g | 73.3 cd | 33.3 h | 55 g | 40 d | 70 d |
| glyphosate + HSCOC | 31.7 g | 31.7 g | 74.3 d | 75 cd | 45.7g | 48.3 h | 55 c | 58.3 ef |
| glyphosate + HSMOC | 35 g | 45 ef | 73.3 d | 73.3 cd | 55 f | 58.3 g | 43.3 d | 43.3 g |
| **glyphosate + MASBO-15B** | 65 d | 80 b | 66 e | 71.7 d | 60 ef | 73.3 de | 35 e | 56.7 ef |
| saflufenacil + COC | 41.7 f | 31.7 g | 86 bc | 71.7 d | 86 bcd | 75 de | 86 a | 78.3 c |
| saflufenacil + MOC | 43.3 f | 46.7 ef | 91.7 ab | 91.7 a | 90 a-d | 90 bc | 86 a | 86 b |
| saflufenacil + HSCOC | 48.3 ef | 35 g | 86 bc | 75 cd | 86 bcd | 75 de | 86.7 a | 70 d |
| saflufenacil + HSMOC | 61.7 d | 51.7 e | 97 a | 75 cd | 97 a | 75 de | 91.7 a | 81.7 bc |
| **saflufenacil + MASBO-15B** | 48.3 ef | 51.7 e | 90 abc | 70 d | 90 a-d | 70 e | 89.3 a | 81.7 bc |
| gly. + safl. + COC | 45 f | 61.7 d | 85 bc | 75 cd | 85 cd | 75 de | 77.7 a | 71.7 d |
| gly. + safl. + MOC | 81.7 c | 81.7 b | 95 a | 95 a | 95 ab | 95 ab | 95 a | 95 a |
| gly. + safl. + HSCOC | 56.7 de | 61.7 d | 83.3 c | 80 bc | 83.3 d | 80 d | 86.7 a | 85 b |
| gly. + safl. + HSMOC | 86.7 bc | 93.3 a | 97 a | 97 a | 97 a | 97 a | 91.7 a | 95 a |
| **gly. + safl. + MASBO-15B** | 92.7 ab | 94.3 a | 94 a | 95.7 a | 94 abc | 95.7 ab | 87.7 a | 93.3 a |
| Herbicides used at half the recommended rates, means followed by same letter do not significantly differ (P=0.05, LSD) MOC = methylated seed oil concentrate, HSMOC = high surfactant methylated seed oil concentrate, COC = crop oil concentrate, HSCOC = high surfactant crop oil concentrate | | | | | | | | |

## Claims

1. An adjuvant composition comprising a maleated compound obtained from the reaction of (1) a maleated oil derived from renewable feedstock resources reacted in an ene reaction with an α,β-unsaturated carboxylic acid or anhydride which introduced additional carboxylic moieties or the related anhydride structure onto the oil molecules with (2) a compound comprising at least one polyetheramine, wherein the molar ratio of maleated oil (1) to compound (2) is greater than 1.1:1.

2. The adjuvant composition according to claim 1, wherein the maleated oil is a maleated vegetable oil.

3. The adjuvant composition according to claim 2, wherein the maleated vegetable oil is a maleated soybean oil.

4. The adjuvant composition according to claim 1, where the maleated oil is a maleated alkyl ester of a fatty acid.

5. The adjuvant composition according to claim 1, wherein the polyetheramine is a polyether monoamine.

6. The adjuvant composition according to claim 1, wherein the adjuvant composition further comprises one or more auxiliary components.

7. An agrochemical formulation comprising a pesticide or mixture of pesticides and the adjuvant composition according to claim 1.

8. The agrochemical formulation according to claim 7, wherein the pesticide is a fungicide, herbicide, insecticide, algicide, molluscicide, miticide, rodenticide, or insect repellant.

9. A concentrate composition comprising from 1% by weight to 80% by weight of a pesticide and from 0.0001% by weight to 20% by weight of the adjuvant composition of claim 1, wherein the % by weight is based on the total weight of the concentrate composition.

10. A spray formulation comprising a pesticide, the adjuvant composition according to claim 1 and water or other solvent.

11. A method for killing or inhibiting or repelling a pest comprising the steps of providing a pesticide or a mixture of pesticides in a pesticidally effective amount; providing an effective amount of an adjuvant composition according to claim 1, combining the pesticide or mixture of pesticides with the adjuvant composition to prepare an agrochemical formulation, and contacting the pesticide formulation and the pest.

## Patentansprüche

1. Adjuvanszusammensetzung, umfassend eine maleierte Verbindung, erhalten aus der Reaktion (1) eines maleierten Öls, gewonnen aus erneuerbaren Rohstoffressourcen, umgesetzt in einer Ene-Reaktion mit einer/einem a,β-ungesättigten Carbonsäure oder Anhydrid, die zusätzliche Carboxyleinheiten oder die entsprechende Anhydridstruktur in die Ölmoleküle eingeführt hat, mit (2) einer Verbindung, die wenigstens ein Polyetheramin umfasst, wobei das Molverhältnis von maleiertem Öl (1) zu Verbindung (2) größer als 1,1:1 ist.

2. Adjuvanszusammensetzung nach Anspruch 1, wobei das maleierte Öl ein maleiertes pflanzliches Öl ist.

3. Adjuvanszusammensetzung nach Anspruch 2, wobei das maleierte pflanzliche Öl ein maleiertes Sojabohnen-Öl ist.

4. Adjuvanszusammensetzung nach Anspruch 1, wobei das maleierte Öl ein maleierter Alkylester einer Fettsäure ist.

5. Adjuvanszusammensetzung nach Anspruch 1, wobei das Polyetheramin ein Polyethermonoamin ist.

6. Adjuvanszusammensetzung nach Anspruch 1, wobei die Adjuvanszusammensetzung außerdem eine oder mehrere Hilfskomponenten umfasst.

7. Agrochemische Formulierung, die ein Pestizid oder eine Mischung von Pestiziden und die Adjuvanszusammensetzung nach Anspruch 1 umfasst.

8. Agrochemische Formulierung nach Anspruch 7, wobei das Pestizid ein Fungizid, Herbizid, Insektizid, Algizid, Molluskizid, Mitizid, Rodentizid oder Insektenschutzmittel ist.

9. Konzentratzusammensetzung, umfassend von 1 Gewichts-% bis 80 Gewichts-% eines Pestizids und von 0,0001 Gewichts-% bis 20 Gewichts-% der Adjuvanszusammensetzung nach Anspruch 1, wobei die Gewichts-% auf das Gesamtgewicht der Konzentratzusammensetzung bezogen sind.

10. Sprühformulierung, umfassend ein Pestizid, die Adjuvanszusammensetzung nach Anspruch 1 und Wasser oder anderes Lösemittel.

11. Verfahren zur Abtötung oder Hemmung oder Abwehr eines Schädlings, umfassend die Schritte der Bereitstellung eines Pestizids oder einer Mischung von Pestiziden in einer pestizidisch wirksamen Menge, Bereitstellung einer wirksamen Menge einer Adjuvanszusammensetzung nach Anspruch 1, Zusammenbringen des Pestizids oder der Mischung von Pestiziden mit der Adjuvanszusammensetzung, um eine agrochemische Formulierung herzustellen, und In-Kontakt-Bringen der Pestizidformulierung und des Schädlings.

## Revendications

1. Composition d'adjuvant comprenant un composé maléaté obtenu par la réaction de (1) une huile maléatée dérivée de ressources de matières premières renouvelables ayant réagi dans une réaction ène avec un acide ou un anhydride carboxylique α,β-insaturé qui a introduit des groupements carboxyliques supplémentaires ou la structure anhydride correspondante sur les molécules d'huile avec (2) un composé comprenant au moins une polyétheramine, où le rapport molaire de l'huile maléatée (1) au composé (2) est supérieur à 1,1:1.

2. Composition d'adjuvant selon la revendication 1, où l'huile maléatée est une huile végétale maléatée.

3. Composition d'adjuvant selon la revendication 2, où l'huile végétale maléatée est une huile de soja maléatée.

4. Composition d'adjuvant selon la revendication 1, où l'huile maléatée est un ester alkyle maléaté d'un acide gras.

5. Composition d'adjuvant selon la revendication 1, où la polyétheramine est une monoamine de polyéther.

6. Composition d'adjuvant selon la revendication 1, où la composition d'adjuvant comprend en outre un ou plusieurs composants auxiliaires.

7. Formulation agrochimique comprenant un pesticide ou un mélange de pesticides et la composition d'adjuvant selon la revendication 1.

8. Formulation agrochimique selon la revendication 7, où le pesticide est un fongicide, un herbicide, un insecticide, un algicide, un molluscicide, un miticide, un rodenticide ou un insectifuge.

9. Composition de concentré comprenant de 1% en poids à 80% en poids d'un pesticide et de 0,0001% en poids à 20% en poids de la composition adjuvante de la revendication 1, où le % en poids est basé sur le poids total de la composition concentrée.

10. Formulation de pulvérisation comprenant un pesticide, la composition d'adjuvant selon la revendication 1 et de l'eau ou un autre solvant.

11. Procédé pour tuer ou inhiber ou repousser un nuisible, comprenant les étapes consistant à prévoir un pesticide ou un mélange de pesticides en une quantité efficace sur le plan pesticide ; à prévoir une quantité efficace d'une composition d'adjuvant selon la revendication 1, à combiner le pesticide ou le mélange de pesticides avec la composition d'adjuvant pour préparer une formulation agrochimique, et à mettre en contact la formulation de pesticide et le nuisible.
